# EUROPÄISCHE PATENTSCHRIFT

(11) **EP 3 414 364 B1**
(45) Veröffentlichungstag und Bekanntmachung des Hinweises auf die Patenterteilung: **03.06.2020**
(21) Anmeldenummer: 17704469.0
(22) Anmeldetag: 10.02.2017
(51) Int. Cl.: C25D 5/56, C23C 18/16, C23C 18/20, C23C 18/24, C23C 18/30, H01M 8/0656, C25B 1/04, C25B 1/30, C25D 21/14, C25D 21/22

(54) **VERFAHREN ZUR VORBEHANDLUNG VON KUNSTSTOFFTEILEN FÜR DIE GALVANISCHE BESCHICHTUNG**
METHOD FOR PRE-TREATING PLASTIC PARTS FOR GALVANIC COATING
PROCÉDÉ DE PRÉTRAITEMENT DE PIÈCES EN PLASTIQUE POUR L'ÉLECTROPLACAGE

(30) Priorität: 12.02.2016 DE 102016202175
(43) Veröffentlichungstag der Anmeldung: 19.12.2018
(73) Patentinhaber: Biconex GmbH, 01454 Radeberg (DE)
(72) Erfinder: GÜNTHER, Tobias, 01477 Arnsdorf (DE); ROOS, Steffen, 01277 Dresden (DE); MAFFERT, Anika, 01127 Dresden (DE); HOFINGER, Jürgen, 01187 Dresden (DE); WENGRZIK, Stefanie, 01307 Dresden (DE)
(74) Vertreter: Kailuweit & Uhlemann Patentanwälte Partnerschaft mbB
(86) Internationale Anmeldenummer: PCT/EP2017/053046
(87) Internationale Veröffentlichungsnummer: WO 2017/137584

(56) Entgegenhaltungen:
- EP-A1- 2 853 619
- WO-A1-2008/056603
- DE-A1- 3 928 832
- DE-A1- 4 326 540
- US-B1- 6 712 948

## Beschreibung

Die vorliegende Erfindung betrifft ein Verfahren zur Vorbehandlung von Kunststoffteilen für die galvanische Beschichtung.

Kunststoffe gewinnen auf Grund ihres geringen Gewichts, Unempfindlichkeit gegenüber Korrosion, preiswertes Herstellen von Rohlingen durch Spritzgießen und damit Wegfall der mechanischen Oberflächenbehandlung als Grundwerkstoff zunehmend an Bedeutung. Zu technischen und auch dekorativen Zwecken ist jedoch in vielen Fällen eine Beschichtung mit Metallen notwendig. Die Abscheidung metallischer Beschichtungen auf Kunststoffen mittels außenstromloser (chemischer) und galvanischer Verfahren ist seit längerem bekannt.

Dabei wird die Haftfestigkeit dieser außenstromlos oder galvanisch aufgebrachten metallischen Schichten auf Kunststoffoberflächen im Wesentlichen durch die Oberflächenstrukturierung des Kunststoffes und durch die Hydrophilie (Benetzbarkeit) der Oberfläche bestimmt.

Die Strukturierung von Kunststoffoberflächen wird im Allgemeinen vorgenommen um die Morphologie der äußeren Schicht des Kunststoffs so zu modifizieren, dass sich die aufgeraute Oberfläche stark vergrößert, sodass mehr Fläche vorhanden ist, und die metallische Beschichtung in den so geschaffenen Kavitäten verankert werden kann. Das kann sowohl mechanisch als auch chemisch erfolgen.

Außerdem sollte die Benetzbarkeit der Oberfläche erhöht werden, das heißt die durch Ladungen induzierten anziehenden Wechselwirkungen der Bauteiloberfläche mit Molekülen der Beschichtungslösung sollten verstärkt und verfestigt werden.

Nach dem Stand der Technik werden beide Faktoren bisher durch einen selektiven oxidativen Angriff der Oberfläche wie z.B. durch Chromschwefelsäure oder Kaliumpermanganat vorgenommen (Suchentrunk, R et al., Kunststoff-Metallisierung, Schriftenreihe Galvanotechnik und Oberflächenbehandlung, 3. Auflage, Eugen Leuze Verlag, 2007). Dieser Vorgang wird auch als Beize bezeichnet. Voraussetzung für die Strukturierung von Oberflächen durch Beizvorgänge ist eine gewisse Selektivität des Beizangriffes, auch Strukturätzen genannt. Dies wird üblicherweise durch Inhomogenitäten im Kunststoffmaterial erreicht:
1. Kunststoffe (Polymere) können je nach Aufbau unterschiedlich stark ausgeprägte kristalline Bereiche ausbilden. In diesen Bereichen sind die Makromoleküle, aus denen die Kunststoffe bestehen, besonders dicht und können einem oxidativen Angriff besser widerstehen.
2. Bei der Verarbeitung von Kunststoffen können Partikel oder Fasern beigemischt werden, die als Füllstoff die Materialeigenschaften insgesamt, aber auch lokal verändern.
3. Durch die Verwendung von polymeren Blends (makroskopisch homogene Mischung von zwei oder mehr verschiedenen Polymeren, Def. nach IUPAC Compendium of Chemical Terminology 2nd Edition, 1997) werden gezielt Kunststoffe verwendet, die aus einer Mischung unterschiedlicher Kunststoffe bestehen.

Kunststoffe, die beispielsweise zur Herstellung von metallisch beschichteten Bauteilen verwendet werden, bestehen fast immer aus verschiedenen Phasen.

Durch die Verwendung mehrphasiger Werkstoffe erfolgt der Angriff der Oberfläche durch die Beize lokal unterschiedlich schnell. Dies führt zu einer Strukturierung der Oberfläche ("Strukturätzen").

Unter dem Begriff "Beize" wird eine Substanz verstanden, die Teile der Kunststoffbauteiloberfläche in einem nicht reversiblen Vorgang herauslöst. Durch Aufbrechen von Bindungen der Makromoleküle werden die Molekülketten verkürzt und die Festigkeit des Werkstoffes herabgesetzt.

Die Selektivität des Beizangriffes ist bei den bekannten Methoden begrenzt. Grundsätzlich werden alle Phasen des Kunststoffes angegriffen, jedoch unterschiedlich schnell. Bei gut mischbaren Komponenten befinden sich die leichter ätzbaren Einschlüsse nicht unmittelbar an der Oberfläche, sodass durch die Beize zunächst die stabilere Komponente des Werkstoffes direkt an der Oberfläche angegriffen werden muss. Für diesen Ätzprozess, der von der Oberfläche des Bauteils ausgehend verschiedene Phasen des Kunststoffgemisches unterschiedlich schnell abträgt, sind längere Kontaktzeiten erforderlich, die typischerweise zwischen 10 und 20 Minuten liegen, in speziellen Fällen aber auch deutlich über 20 Minuten liegen können.

Bei den zur Galvanisierung eingesetzten mehrphasigen Kunststoffen handelt es sich häufig um ABS, ein Polymerblend aus Acrylnitril, Styrol und Butadien. Diese werden mit Chromschwefelsäure behandelt, um die Butadienphase durch einen oxidativen Angriff aus dem Kunststoff herauszuätzen. Durch die Oxidation findet gleichzeitig eine chemische Veränderung der Oberfläche statt, die die Benetzbarkeit deutlich erhöht.

Nachteilig an diesem Prozess ist vor allem die hohe Toxizität der Chromsäure in Form von Chromtrioxid. Eine Aufnahme über die Atemwege über Aerosolbildung in den galvanischen Bädern kann bereits in geringen Konzentrationen Lungenkrebs hervorrufen. Aus diesem Grund sieht die Europäische Union ein Verbot dieser Substanz ab dem 21. September 2017 vor.

Daher gibt es seit vielen Jahren Bestrebungen zum Ersatz von Chromschwefelsäure in der Kunststoffgalvanik.

DE 42 21 948 C1 offenbart ein Verfahren zur Vorbehandlung zur Metallisierung von Kunststoffen mit Permanganat enthaltenden Lösungen. Als Beizlösung wird entweder Kaliumpermanganat oder Natriumpermanganat verwendet. Um die Beizwirkung zu erhöhen, ist dem Beizprozess noch ein Tauchbad mit einem Quellmittel vorgeschaltet. Nachteilig bilden sich während des Oxidationsprozesses Manganverbindungen, die sich als Verunreinigungen in Form von Braunstein auf den Kunststoffen ablagern und die in einem Reduktionsbad vor Durchführung der weiteren Verfahrensschritte entfernt werden müssen.

Ein weiterer Nachteil der Permanganat-Vorbehandlung ist, dass die Oberfläche der Träger der Kunststoffteile in den anschließenden Schritten mitbeschichtet wird, wodurch ein zusätzliches Bad notwendig ist, um die Oberfläche der Träger so zu modifizieren, dass diese in den nachfolgenden Schritten nicht beschichtet werden. Beim Einsatz chromhaltiger Bäder war dies bisher durch Einlagerung der Cr-Ionen nicht erforderlich.

Ein weiteres Verfahren zur chromfreien ABS-Kunststoffvorbehandlung offenbart US 5,160,600 B1**.** Dabei wird der Kunststoff mit einem Gemisch aus anorganischen Säuren wie Schwefelsäure, Phosphorsäure und Salpetersäure in Kombination mit Edelmetallionen vorbehandelt, wobei die Salpetersäure gleichzeitig als Oxidationsmittel dient. Die Metallionen dienen dabei zur Unterdrückung von Nitrierreaktionen und damit verbundenes "Überätzen" (Spalte 3, Zeile 49-55) an der Kunststoffoberfläche. Postuliert wird in der Schrift, dass durch die Kombination aus Schwefelsäure und Salpetersäure in einem ersten Schritt eine Degradation der Polybutadienphase stattfindet. Die degradierten Bestandteile gehen in einem zweiten Schritt in die Tauchbadlösung über und werden darin gelöst. Laufen beide Schritte in nur einem Tauchbad ab, müssen sehr enge Konzentrationsbereiche der einzelnen Tauchbadbestandteile eingehalten werden, was dieses Verfahren wenig praktikabel gestaltet (Spalte 15, Zeilen 53 - 62). Bevorzugt wird deshalb ein Zwei-Stufen-System durchgeführt, in dem die Kunststoffteile im ersten Bad angelöst und im zweiten tatsächlich gebeizt werden.

Um die Benetzung zu verbessern, werden dem Tauchbad zusätzlich Tenside zugegeben. Außerdem wird offenbart, dass durch Zusatz anderer Oxidanzien die Oxidationsfähigkeit der Salpetersäure erhöht wird.

Die Möglichkeit zur oxidativen Beize von Kunststoffen durch Peroxoschwefelsäure, wie sie aus Mischungen von Wasserstoffperoxid und Schwefelsäure entsteht, ist ebenfalls bekannt. In **"**Coatings 2014, 4, 574-586**"** werden beispielsweise Kunststoffoberflächen in einer Lösung aus Schwefelsäure, Wasserstoffperoxid und Wasser in einem Volumenverhältnis von 1:1,5:5,5 vorbehandelt, um sie anschließend galvanisch mit Kupfer zu beschichten. Die aus Schwefelsäure und Wasserstoffperoxid gebildeten Peroxoschwefelsäuren wirken dabei als starkes Oxidationsmittel, sind aber nachteilig äußerst instabil. Auch spontane explosionsartige Zersetzungen sind möglich und können beispielsweise durch organische Lösungsmittel wie Aceton ausgelöst werden.

Im Umfeld der Kunststoffgalvanik finden Peroxoschwefelsäuren ebenfalls Anwendung bei der Durchkontaktierung von Leiterplatten. So wird in z. B. in DE 39 28 832 A1 eine "Durchkontaktierte Leiterplatte mit Resist sowie Verfahren zur Herstellung derselben" beschrieben, bei der auf den Leiterbahnen eine Basisschicht aus leitfähigen Polymeren aufgebracht wird, die durch eine galvanische Abscheidung mit von Kupfer weiter verstärkt wird. In einer besonderen Ausführungsform wird nach Aufbringen der leitfähigen Polymere unmittelbar vor der galvanischen Abscheidung eine Behandlung der Leiterplatte in einer Lösung aus 100 ml Schwefelsäure und 25 ml Wasserstoffperoxid unter permanenter Lufteinblasung und leichter Schwenkbewegung beschrieben. Da damit die Oxidation jedoch nur unzureichend erfolgt, ist im darauffolgenden Verfahrensschritt eine Behandlung mit Permanganatlösungen erforderlich.

US 2007/0298170 A1 offenbart ein Verfahren zur Vorbehandlung von Polyimid-Kunststoffen durch ein Verfahren, bei dem in einem ersten Schritt eine Behandlung der Bauteile in einer peroxidhaltigen Lösung erfolgt, die auch Schwefelsäure enthält. Die Konzentration der Schwefelsäure wird jedoch in einem niedrigen Bereich von maximal 10 g/l bis 200 g/l angegeben. In diesem Bereich liegt die Schwefelsäure ausschließlich einfach und zweifach dissoziiert vor.

Die Beizwirkung findet daher nur an der Oberfläche der Bauteile statt, ein tieferes Eindringen in den Kunststoff ist nicht möglich.

Auch EP 2 853 619 A1 beschreibt eine Methode mit den Chemikalien Schwefelsäure und Peroxodisulfat, die Schlieren an der Oberfläche entfernen.

US 6 712 648 B1 befasst sich ebenfalls mit einer milden Ätzung, bei der keine Aufrauung der Kunststoffoberfläche auftritt

**WO2008l056603A1** zielt auf eine Vorbehandlung ohne Aufrauung der Oberfläche ab, wobei die behandelten Kunststoffe einen aromatischen Ring in der Hauptkette tragen.

DE 43 26 540 A1 beschreibt ein Verfahren zur Erzeugung von Peroxodischwefelsäuren aus wässrigen Schwefelsäuren durch Elektrolyse in Gegenwart von Thiocyanaten und/oder Rhodanwasserstoffsäuren und/oder anderen Chemikalien.

Nach wie vor besteht ein großer Bedarf für einfache alternative Verfahren zur Vorbehandlung von Kunststoffen für die anschließende stromlose und galvanische Beschichtung.

Für eine effektive Strukturierung der Oberfläche sollten die oberflächennahen Kunststoffschichten gut vom Oxidationsmittel durchdrungen werden damit der Angriff schneller erfolgt. Außerdem sollte die zurückbleibende Oberfläche hydrophil sein um von den folgenden Tauchbädern benetzt werden zu können.

Bisherige einfache Verfahren zum Beizen von Kunststoffen auf Basis von Wasserstoffperoxid führen zu einer vergleichsweise schwachen Strukturierung der Oberfläche im Vergleich zu den hohen Anforderungen für die Haftfestigkeit der metallischen Schichten, insbesondere für automobile und sanitäre Anwendungen.

Aufgabe der Erfindung ist es, ein Verfahren zur Vorbehandlung von Kunststoffoberflächen auf Basis von Schwefelsäure und Peroxyverbindungen bereitzustellen, das eine hohe Haftfestigkeit des Metalls auf der Kunststoffoberfläche ermöglicht und dabei ökonomische und ökologische Nachteile des Standes der Technik überwindet.

Gelöst wird die Aufgabe durch ein Verfahren zur Vorbehandlung von
Oberflächen von Teilen aus Kunststoff für die galvanische Beschichtung mit den Schritten
A) Herstellen einer Kunststoffvorbehandlungstauchlösung, enthaltend undissoziierte Peroxomonoschwefelsäure und undissoziierte Schwefelsäure aus konzentrierter Schwefelsäure, Wasser und Oxidationsmittel, wobei das Oxidationsmittel mindestens eine Peroxygruppe enthält, wobei das Oxidationsmittel in situ durch Elektrolyse generiert wird, wobei das Verhältnis der Stoffmenge an Schwefelsäure (S) zur Stoffmenge an Wasser (W) 0,42:1 bis 1,65:1 beträgt, wobei die Elektrolyse mindestens so lange betrieben wird, bis das Verhältnis der Stoffmenge an Schwefelsäure zur Stoffmenge aller Peroxygruppen in der Tauchlösung höchstens 312:1 beträgt,
B) Tauchen des zu beschichtenden Kunststoffteils in einem Tauchbad in der Kunststoffvorbehandlungstauchlösung.

Erfindungsgemäß wird im SchrittA eine Kunststoffvorbehandlungstauchlösung, enthaltend undissoziierte Schwefelsäure und undissoziierte Peroxomonschwefelsäure aus Komponenten hergestellt.

Prinzipiell ist die Reihenfolge des Zusammengebens der einzelnen Komponenten beliebig wählbar. Der Fachmann kann jedoch eine bestimmte Reihenfolge bevorzugen.

In Anwesenheit von Wasser dissoziiert Schwefelsäure zunächst einfach durch Abgabe eines Protons gemäß der Gleichung (la) in HSO₄⁻ (Hydrogensulfat-Ion), während das Wasser durch Aufnahme eines Protons zu H₃O⁺ (Hydroniumion) reagiert.

H₂SO₄ + H₂O → HSO₄⁻ + H₃O⁺ (Ia)

Für besonders hohe Schwefelsäurekonzentrationen in Bezug auf Wasser gilt, dass ein Teil der Schwefelsäure noch undissoziiert vorliegt. So kann man die Gleichung (Ia) auch wie folgt angeben, wenn gilt x > y:

xH₂SO₄ + y H₂O → (x-y) H₂SO₄ + y HSO₄⁻ + y H₃O⁺ (Ia - ii)

In verdünnten wässrigen Lösungen der Schwefelsäure, das heisst, bei niedrigeren Konzentrationen der Schwefelsäure in Bezug auf Wasser reagiert das Hydrogensulfat-Ion durch weitere Protonenabgabe zum Sulfation SO₄²⁻ unter Bildung von Hydroniumion H₃O⁺ gemäß Gleichung (Ib)

HSO₄⁻ + H₂O → SO₄²⁻ + H₃O⁺ (Ib)

In den aus dem Stand der Technik bekannten Tauchlösungen zur Kunststoffvorbehandlung werden üblicherweise niedrige Schwefelsäurekonzentrationen in Wasser zusammen mit Wasserstoffperoxid verwendet. Es liegen dann hohe Anteile an zweifachdissoziierter Schwefelsäure gemäß Gleichung (Ib - ii) vor:

x H₂SO₄ + y H₂O → (x-z) SO₄²⁻ + z HSO₄⁻ + (2x-z) H₃O⁺ + (y-2x+z) H₂O (Ib-ii)

Größere Mengen undissoziierter Schwefelsäure treten in Gemischen mit Wasser auf, wenn der molare Anteil der Schwefelsäure mindestens 50% beträgt und somit nicht jedes Schwefelsäuremolekül mit einem Wassermolekül reagieren kann. Dies entspricht einer Massenkonzentration der Schwefelsäure von 84,5%. Allerdings enthalten Schwefelsäurelösungen auch unterhalb dieser Konzentration aufgrund des dynamischen Gleichgewichts undissoziierte Anteile, die im Sinne der Erfindung genutzt werden können. Die Anteile der Dissoziationsprodukte von Schwefelsäure können mittels Raman-Spektroskopie bestimmt werden und wurden erstmals von Young et al. im Jahr 1959 veröffentlicht ([Young et al., 1959] Young, T. F., Maranville, L. F., und Smith, H. M. (1959). Raman spectral investigations of ionic equilibria in solutions of strong electrolytes. In Hamer, W. J., editor, The Sctructur of Electrolytic Solutions, chapter 4, pages 35-63. John Wiley and Sons, Inc., New York.).

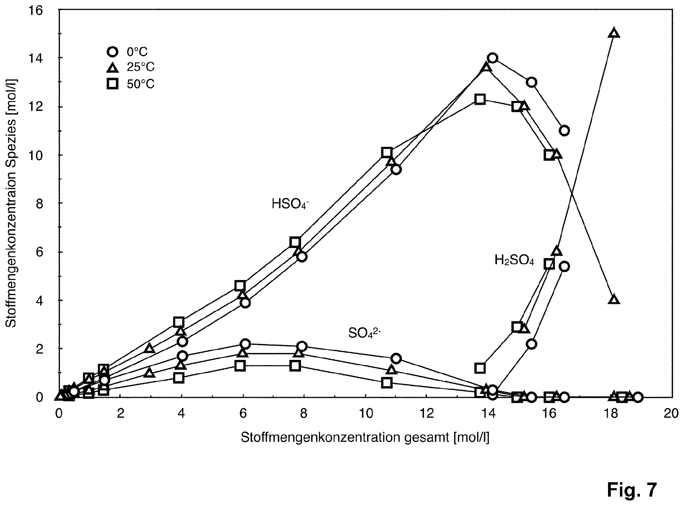

Fig. 7 zeigt die Konzentration der einzelnen Spezies des Dissoziationsgleichgewichts der Schwefelsäure bei verschiedenen Temperaturen von 0°C, 25°C und 50°C.

In Abhängigkeit von der Temperatur verschiebt sich das Dissoziationsgleichgewicht.

Aus den Messungen von Young et al., wie sie beispielsweise in Fig. 7 dargestellt sind, ist durch Extrapolation der Graphen der undissoziierten Schwefelsäure, auch zu entnehmen, dass undissoziierte Schwefelsäure in einem Schwefelsäure-Wasser-Gemisch bei einer Temperatur von 25°C ab einer Stoffmengenkonzentration von ca. 13 mol/l oder 1274 g/l Lösung vorliegt.

Das Diagramm zeigt die Konzentration der Dissoziationsprodukte sowie der undissoziierten Schwefelsäure in Abhängigkeit der Gesamtkonzentration aller Schwefelsäuremoleküle oder deren Dissoziationsprodukte in wässriger Lösung. Diese Abhängigkeit ist für 0 °C, 25 °C und 50 °C dargestellt, da sie auch durch die Temperatur beeinflusst wird.

Die Dissoziation der Schwefelsäure mit Wasser ist exotherm, das Dissoziationsgleichgewicht verschiebt sich daher bei höheren Temperaturen in Richtung der undissoziierten Schwefelsäure. In Übereinstimmung damit liegen bei Young et al. nach Extrapolation der Messwerte bei einer Temperatur von 50 °C geringe Anteile undissoziierter Schwefelsäure bereits bei einer Gesamtschwefelsäurekonzentration von ca. 12 mol/l vor. Dies entspricht unter Berücksichtigung der Dichte einem Massenanteil an Schwefelsäure von 72 % oder einer Konzentration von 1176 g/l. Das Verhältnis der Stoffmenge an Schwefelsäure zur Stoffmenge an Wasser beträgt dann 0,47:1.

Erst diese besonders hohen Konzentrationen an Schwefelsäure in Bezug auf Wasser bewirken also, dass Schwefelsäure in Anwesenheit von Wasser zum Teil noch undissoziiert vorliegt.

Vorteilhaft ist, im Gegensatz zu den aus dem Stand der Technik bekannten Tauchlösungen, ein Anteil undissoziierter Schwefelsäure in der erfindungsgemäßen Tauchlösung vorhanden.

Das undissoziierte H₂SO₄-Molekül ist in der Lage, in den Kunststoff zu diffundieren. Dieses Eindringen von Molekülen reduziert die Bindungskräfte zwischen den Polymerketten und führt somit unter Volumenzunahme zu reduzierter Festigkeit des Kunststoffes. Dieser Effekt wird als Quellen bezeichnet. Die undissoziierte Schwefelsäure ist also ein besonders starkes Quellmittel und ermöglicht ein tiefes Eindringen in den Kunststoff und ein ausreichendes Aufweichen, sodass die Oxidationsprozesse auch tiefer unter der Oberfläche des Kunststoffs erfolgen können. Das Oxidationsmittel greift dann eine Phase des Kunststoffs so stark an, dass diese selektiv entfernt wird. Diese Oxidationsprozesse bewirken eine Gasbildung durch die Zerstörung der Polymermatrix unter Spaltung der Polymerketten bis hin zum Abbau der organischen Moleküle u.a. zu Kohlendioxid und Stickoxiden. Dies ist verbunden mit einer Volumenausdehnung unter der Oberfläche, welche dann durch den entstehenden Druck aufplatzt und dadurch strukturiert wird.

Durch das verbesserte Erweichen der Kunststoffoberfläche mittels undissoziierter Schwefelsäure kann das Oxidationsmittel besonders effizient in den Kunststoff eindringen und die darin befindlichen Bestandteile oxidieren.

Peroxyverbindungen sind Verbindungen, die über mindestens eine Sauerstoff-Sauerstoff-Gruppe im Molekül verfügen, die Peroxygruppe-O-O- . Im Gegensatz zum Oxidion, dem häufigsten Anion des Sauerstoffs, besitzen die Sauerstoffatome im Peroxidion die Oxidationsstufe -1. Es gibt sowohl organische als auch anorganische Peroxide.

Im Sinne der Erfindung werden die Peroxyverbindungen in wasserabspaltende und nicht wasserabspaltende Peroxyverbindungen unterteilt.

Im Sinne der Erfindung gehören alle Peroxyverbindungen, die in konzentrierter Schwefelsäure durch Dissoziation oder Reaktion Wasser freisetzen können, zu den wasserabspaltenden Peroxyverbindungen. Dabei ist es unerheblich ob die Eliminierungsreaktion an der Peroxygruppe erfolgt oder in anderen Bereichen der Molekülstruktur. Frei werdendes Wasser wird in der Tauchlösung durch die enthaltenen Mineralsäuren nach folgender Gleichung protoniert:

HR + H₂O → R⁻ + H₃O⁺

mit R=Säureanion

Erfindungsgemäß enthält die Tauchlösung undissoziierte Schwefelsäure.

Wie oben beschrieben, ist das Verhältnis der Schwefelsäure zu Wasser bestimmend für ihren Dissoziationsgrad.

Handelt es sich bei dem Oxidationsmittel um eine nicht wasserabspaltende Peroxyverbindung, so muss lediglich das Verhältnis der Stoffmenge an Schwefelsäure zur Stoffmenge an Wasser in einem bestimmten Bereich liegen.

Der Begriff der Stoffmenge an Schwefelsäure bezeichnet die Gesamtstoffmenge der Schwefelsäure und ihrer Dissoziationsprodukte.

Erfindungsgemäß beträgt das Verhältnis der Stoffmenge an Schwefelsäure (S) zu der Stoffmenge von Wasser (W) 0,42:1 bis 1,65:1, bevorzugt 0,55:1 bis 1,05:1, besonders bevorzugt 0,64:1 bis 0,92:1.

In diesem Bereich dissoziiert die Schwefelsäure in Abhängigkeit von der Temperatur nur unvollständig und ein Anteil undissoziierter Schwefelsäure ist vorhanden.

In der erfindungsgemäßen Tauchlösung beträgt der Dissoziationsgrad der Schwefelsäure 99 bis 50 %, das heißt, der Anteil an undissoziierter Schwefelsäure bezogen auf alle in der Tauchlösung vorhandenen Sulfatgruppen beträgt 1 bis 50 %,

Beispielsweise handelt es sich bei der wasserabspaltenden Peroxyverbindung um Wasserstoffperoxid. Dabei erfolgt gemäß Gleichung (Ib-ii) bei der Reaktion von Schwefelsäure mit Wasserstoffperoxid die Bildung von Wasser. Dieses Wasser trägt nun zur Dissoziation der Schwefelsäure bei und muss deshalb mit in das Verhältnis Schwefelsäure zu Wasser aufgenommen werden.

In Gegenwart von Oxidationsmittel, beispielsweise Wasserstoffperoxid, setzt sich die Schwefelsäure gemäß Gleichung II-ii um:

2 H₂SO₄ + H₂O₂ → H₂SO₅ + HSO₄⁻ + H₃O⁺ (II-ii)

Die Hydrogensulfationen können gemäß Gleichung(II-i) noch weiter reagieren:

3 HSO₄⁻ + H₂O₂ → H₂SO₅ + 2 SO₄²⁻ + H₃O⁺ (II-i)

Es entsteht Peroxomonoschwefelsäure, welche bei hohen Konzentrationen an Schwefelsäure in Bezug auf Wasser zum Teil nicht dissoziiert. Erfindungsgemäß enthält die Kunststoffvorbehandlungstauchlösung undissoziierte Peroxomonoschwefelsäure. Diese wirkt wie die undissoziierte Schwefelsäure als Queller.

Der "Verbrauch" undissoziierter Schwefelsäure kann durch Bildung undissoziierter Peroxomonoschwefelsäure kompensiert werden, wobei eine geringfügige Über- oder Unterkompensation möglich ist. Man geht daher davon aus, dass ein Teil der Peroxomonoschwefelsäure die in dem oben beschriebenen Dissoziationsgleichgewicht notwendige undissoziierte Schwefelsäure ersetzt.

Gleichzeitig wirkt die Peroxomonschwefelsäure als Oxidationsmittel, welches zum oxidativen Herauslösen ("Beizen") eines Kunststoffbestandteils dient. Während dieses Prozesses wird nicht nur die Oberfläche des Kunststoffs strukturiert und deren Morphologie den strukturellen Voraussetzungen für die feste Verhaftung der später abgeschiedenen Beschichtungen angepasst. Es erfolgt gleichzeitig auch eine Hydrophilierung der Oberfläche, sodass eine wesentlich bessere Benetzung der Oberfläche erfolgen kann. Ein starkes Oxidationsmittel führt zur Hydrophilierung der Oberfläche durch Einbringen von funktionellen Gruppen insbesondere Carboxylgruppen.

Überraschend wurde gefunden, dass bereits ein geringer Anteil an Oxidationsmittel in der Tauchlösung zu einer ausreichend starken Oxidationswirkung führt. Die Oxidationsmittel dringen gut in den Kunststoff ein, da dieser durch die hohen Schwefelsäurekonzentrationen und den damit verbundenen Anteil an undissoziierter Schwefelsäure in einer Tiefe von mehreren Mikrometern stark erweicht wird. Die Oxidationsmittel können dementsprechend auch tiefer in den Kunststoff eindringen und die entsprechenden Bestandteile oxidieren.

Die Oxidation, beispielsweise des Butadiens, findet somit in hohem Maße unterhalb der Oberfläche statt und führt durch eine starke Volumenausdehnung und damit verbundenes "Austreiben" gasförmiger Oxidationsprodukte zur Strukturierung der Oberfläche. Im Gegensatz zum Stand der Technik wird somit die Strukturierung nicht vorwiegend durch einen selektiven Ätzprozess von der Oberfläche in die Tiefe verursacht, sondern über eine Volumenausdehnung durch den Oxidationsprozess innerhalb der Oberflächenschicht. Es entsteht eine mikrostrukturierte Oberfläche.

Die mikrostrukturierte Oberfläche wirkt somit im Gegensatz zu geätzten Oberflächen nach dem Stand der Technik relativ glatt, weist jedoch eine dichte Verteilung von Kratern durch das ausgetriebene Butadien auf. Diese Mikrostrukturierung bewirkt eine besonders gute Haftung der nachfolgenden Schichten.

Anders als im Stand der Technik erfolgt keine Bildung von Degradationsprodukten, die im Tauchbad gelöst werden und dieses verunreinigen. Hingegen erfolgt vorteilhaft die Bildung gasförmiger Oxidationsprodukte, welche der Tauchlösung entweichen.

Vorteilhaft wird somit der Beizprozess deutlich schneller als bisher innerhalb von einer bis weniger Minuten abgeschlossen und ermöglicht dennoch eine ebenso gute Haftung der nachfolgenden Schichten. Vorteilhaft ergeben sich daraus besonders kurze Tauchzeiten in der erfindungsgemäßen Tauchlösung, die effizient zur Strukturierung der Oberfläche führen.

Die hohen Schwefelsäurekonzentrationen führen außerdem zu einer Stabilisierung der aus dem Oxidationsmittel und Schwefelsäure entstehenden Peroxoschwefelsäuren.

Durch die extreme Verschiebung des Verhältnisses Oxidationsmittel zu Schwefelsäure gegenüber dem Stand der Technik enthält die Lösung außerdem vorteilhaft wesentlich weniger flüchtige Komponenten, womit die Zersetzungsgeschwindigkeit stark gesenkt wird. Die oxidative Wirkung wird somit über einen längeren Zeitraum konstant gehalten.

Vorteilhaft reichen also schon geringe Mengen an Oxidationsmittel aus, um die gewünschte Strukturierung der Oberfläche zu erzielen.

Eine Mindestmenge an Oxidationsmittel ist jedoch nötig, um ausreichend Peroxomonoschwefelsäure zu bilden. Die Menge an Schwefelsäure bezogen auf die Menge aller Peroxygruppen, die durch das Oxidationsmittel eingebracht werden, darf also nicht zu hoch sein.

Erfindungsgemäß beträgt das Verhältnis der Stoffmenge an Schwefelsäure zur Stoffmenge aller Peroxygruppen in der Tauchlösung höchstens 312:1, bevorzugt höchstens 50:1, besonders bevorzugt höchstens 30:1.

In einer Ausführungsform beträgt das Stoffmengenverhältnis Schwefelsäure zu Peroxygruppen 312:1 bis 1,61:1.

Das Verhältnis zwischen der Stoffmenge an Schwefelsäure und der Summe der Stoffmengen von Wasser plus wasserabspaltender Peroxidverbindung spielt eine Rolle um die gewünschten Reaktionen an der Kunststoffoberfläche ablaufen zu lassen

Der Begriff der Masse der Schwefelsäure umfasst die Gesamtmasse der Schwefelsäure plus ihrer Dissoziationsprodukte.

Die Tauchlösung kann dann in das Tauchbad überführt werden bzw. sie wird direkt darin zusammengegeben.

Erfindungsgemäß erfolgt die Herstellung der Tauchlösung aus Wasser, konzentrierter Schwefelsäure und Oxidationsmittel, wobei das Oxidationsmittel mindestens eine Peroxygruppe enthält und wobei das Oxidationsmittel in situ durch Elektrolyse in der Tauchlösung generiert wird.

Die Elektrolyse von Schwefelsäure zu Peroxomonoschwefelsäure ist dem Fachmann bekannt. Beispielhaft sei hier die Patentschrift DE 43 26 540 A1, Beispiel 1, Versuche 5 und 8 zitiert.

Um einen Anteil undissoziierter Schwefelsäure vorliegen zu haben, wird bei der Herstellung der Tauchlösung die Menge an Schwefelsäure und Wasser so gewählt, dass das Verhältnis der Stoffmenge an Schwefelsäure (S) zur Stoffmenge an Wasser (W) 0,42:1 bis 1,65:1 bevorzugt 0,55:1 bis 1,05:1, besonders bevorzugt 0,64:1 bis 0,92:1 beträgt.

Zur Herstellung der erfindungsgemäßen Tauchlösung wird dabei im Anodenraum eine Lösung aus Wasser und Schwefelsäure im erfindungsgemäßen Verhältnis vorgelegt. Der Anodenraum ist durch eine Kationenaustauschermembran vom Kathodenraum getrennt, in dem eine geringer konzentrierte Schwefelsäure in Wasser vorgelegt wird. Durch Anlegen einer Spannung zwischen Anode und Kathode wird Schwefelsäure im Anodenraum zu Peroxomonoschwefelsäure oxidiert.

Um eine ausreichende Menge an Oxidationsmittel zu gewährleisten, wird die Elektrolyse mindestens so lange betrieben, bis das Verhältnis der Stoffmenge von Schwefelsäure zur Stoffmenge der Peroxygruppen 312:1 beträgt, sodass also das Verhältnis der Stoffmenge von Schwefelsäure zur Stoffmenge der Peroxygruppen höchstens 312:1 oder weniger beträgt.

Die Bestimmung der Konzentration der Peroxygruppen erfolgt z. B. nach einer Methode zur Analyse der Konzentration von Persäuren nach R. Wolffenstein und V. Makow, 1923 (siehe "Handbuch der Analytischen Chemie", Herausgegeben von W. Fresenius und G. Jander, III Quantitative Bestimmungs- und Trennungsmethoden, Band VIa, Elemente der sechsten Hauptgruppe, Springer Verlag Berlin Heidelberg, 1953.)

Peroxide wie Wasserstoffperoxid, Peroxodischwefelsäure und Peroxomonoschwefelsäure sind Oxidationsmittel. Daher kann deren Konzentration in Lösung über die Oxidation von zweiwertigen Eisenionen zu dreiwertigen Eisenionen bestimmt werden. Dazu wird die Peroxygruppen enthaltende Lösung mit einer bestimmten Menge zweiwertiger Eisenionen versetzt. Die zur Menge an Peroxygruppen äquivalente Anzahl an Fe2+ Ionen wird oxidiert. Die verbleibenden zweiwertigen Eisenionen können durch Titration mit Kaliumpermanganat quantifiziert werden.

Die Bestimmung des Gesamtaktivsauerstoff erfolgt also durch Oxidation von zweiwertigen Eisenionen durch die Peroxide, zum Beispiel nach der Gleichung:

2Fe²⁺ + R₁-O-O⁻ + 2H⁺—> 2 Fe³⁺+ R₁O⁻+ H₂O

Für alle Reaktionen gilt, dass eine Peroxygruppe mit jeweils zwei Fe²⁺ Ionen umgesetzt wird.

Die Eisenstammlösung setzt sich aus Eisen(II)-sulfat und Ammoniumeisen(II)-sulfat zusammen. Die Konzentration der zweiwertigen Eisenionen wird durch die Reaktion mit 0,02 mol/l Kaliumpermanganatlösung ermittelt. Dabei werden fünf mol Fe2+ mit einem mol MnO4- oxidiert:

Reaktionsgleichung: MnO₄- + 8 H+ + 5 Fe2+→ 5 Fe3+ + Mn2+ + 4 H₂O

Die Differenz an Fe²⁺-Ionen vor und nach Kontakt mit der erfindungsgemäßen Tauchlösung entspricht somit der zweifachen Menge an Peroxygruppen in der untersuchten Menge der Tauchlösung.

Da die Gesamtstoffmenge an Schwefelsäure und deren Dissoziationsprodukten in der gesamten Lösung ebenso bekannt ist, wie das Gesamtvolumen, kann man mit der gemessenen Konzentration der Peroxygruppen in der Probe das erfindungsgemäße Verhältnis der Stoffmengen von Schwefelsäure und Peroxygruppen bestimmen.

Es ist möglich, der Tauchlösung weitere Komponenten zuzugeben, welche die Oxidationswirkung nicht beeinflussen, die Tauchlösung jedoch verdünnen, wobei deren Wirkung erhalten bleibt.

In einer Ausführungsform enthält die Tauchlösung zusätzlich Phosphorsäure, wobei der Massenanteil an Phosphorsäure bis 70 %, bevorzugt bis 60 %, besonders bevorzugt bis 40 % der Gesamtmasse der Tauchlösung beträgt.

Nach der Herstellung der Tauchlösung kann die Vorbehandlung des Kunststoffteils erfolgen.

Bevorzugt wird das zu beschichtende Teil aus Kunststoff vor der Inkubation oder dem Tauchen in die erfindungsgemäße Tauchlösung mit einem Netzmittel behandelt.

Erfindungsgemäß wird das zu beschichtende Teil aus Kunststoff in Schritt B) in einer Tauchlösung, enthaltend undissoziierte Schwefelsäure und undissoziierte Peroxomonoschwefelsäure getaucht.

Bevorzugt beträgt die Inkubationszeit des Kunststoffteils in der erfindungsgemäßen Tauchlösung 1 bis 20 min, besonders bevorzugt 1 bis 15 min, ganz besonders bevorzugt 1 bis 8 min.

Diese Inkubationszeiten liegen unter den aus dem Stand der Technik bekannten und verkürzen vorteilhaft die Gesamtdauer des Verfahrens.

Bevorzugt ist die Tauchlösung metallionenfrei. Bevorzugt ist die Tauchlösung vor der Inkubation der Kunststoffteile metallionenfrei.

Innerhalb des Verfahrens werden die Teile aus Kunststoff bevorzugt an Träger aus leitfähigen Materialien wie Metallen aufgehängt, um sie in die einzelnen Bäder zu tauchen. Dadurch kommt es zum Eintrag von Metallionen in die erfindungsgemäße Tauchlösung. Diese Metallionen wirken äußerst störend auf den oxidativen Prozess in dem Vorbehandlungs-Schritt.

Bevorzugt werden kontaminierende Metallionen kontinuierlich aus der Tauchlösung entfernt.

Bevorzugt erfolgt die Entfernung der Metallionen in einer Elektrolysezelle mit einer Kationentauschermembran.

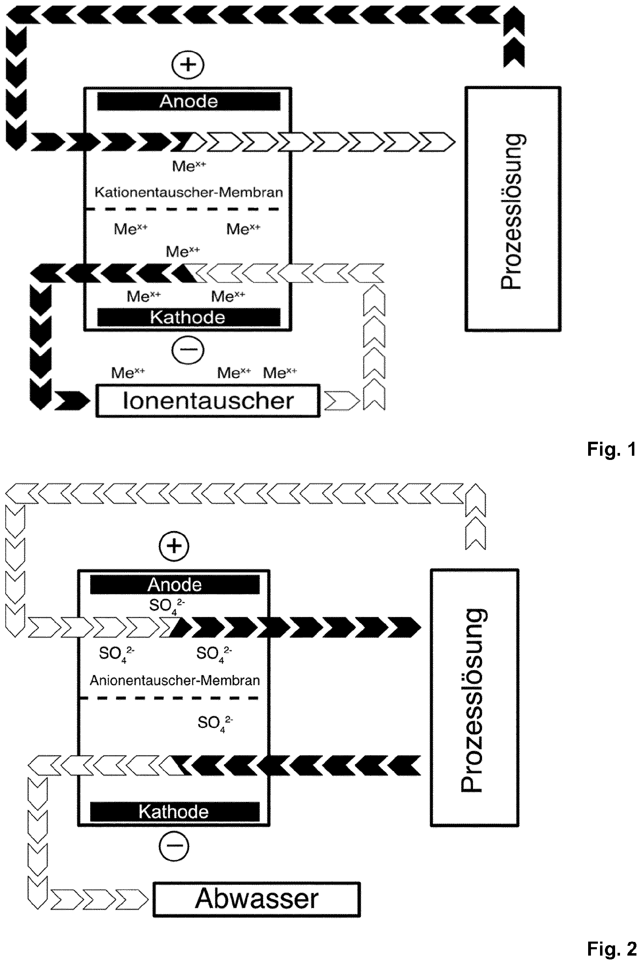

Dabei wird die Tauchbadlösung aus der Tauchbadvorrichtung heraus kontinuierlich durch den Anodenraum einer Elektrolysezelle mit einer Kationenaustauschermembran und wieder in die Tauchbadvorrichtung hinein gespült. Die Metallionen migrieren in der Zelle durch die Membran in Richtung Kathode, die Lösung wird somit im Anodenraum an Metallionen abgereichert. Im Kathodenraum der Elektrolysezelle reichert sich die Lösung mit Metallionen an. Diese werden in einem separaten Kreislauf durch einen Ionenaustauscher wieder entfernt (s. Fig. 1). Die an Metallionen abgereicherte Lösung aus dem Anodenraum wird wieder in die Tauchbadvorrichtung hineingespült.

Um die oxidative Wirkung der Tauchlösung aufrecht zu erhalten, ist es ebenfalls wichtig, die Konzentration an Schwefelsäure und Wasserstoffperoxid konstant zu halten. Da Schwefelsäure in solch hohen Konzentrationen stark hygroskopisch ist, und auch da bei der ihrer Reaktion mit Wasserstoffperoxid gemäß Formel (II-ii) Wasser entsteht, erfolgt ein kontinuierlicher Eintrag an Wasser in die Tauchlösung, der die Konzentrationen der einzelnen Komponenten in der Tauchlösung verändert.

In einer bevorzugten Ausführung wird die Konzentration der Komponenten der Tauchlösung durch kontinuierliche Entfernung von Wasser aus der Tauchlösung konstant gehalten.

Bevorzugt erfolgt die Entfernung von Wasser in der Tauchlösung in einer Elektrolysezelle mit einer Anionenaustauschermembran.

Bevorzugt erfolgt dabei die Entfernung von Wasser in der Tauchlösung durch die Entfernung von Sulfat-Anionen über eine Anionentauschermembran. Dabei wird die Tauchbadlösung mit einem geringen permanenten Abwasserstromaus der Tauchbadvorrichtung heraus kontinuierlich durch den Kathodenraum einer Elektrolysezelle mit Anionenaustauschermembran und wieder in die Tauchbadvorrichtung hinein gespült. Die Sulfationen migrieren aus dem Kathodenraum in der Zelle durch die Membran in Richtung Anode, die Lösung wird somit im Anodenraum an Sulfationen angereichert. Im Kathodenraum der Zelle reichert sich die Lösung mit Sulfationen ab. Parallel dazu wird eine kleinere Menge der Tauchbadlösung kontinuierlich in den Kathodenraum der Zelle transportiert, jedoch nicht wieder zurückgespült, sondern als Abwasser entsorgt. Der Tauchbadlösung wird somit kontinuierlich an Sulfationen abgereicherte Lösung entzogen, um den Eintrag von Wasser teilweise zu kompensieren (s. Fig. 2)

In einer besonders bevorzugten Ausführung erfolgt die Entfernung von Metallionen nach Fig. 1 und die Entfernung von Wasser nach Fig. 2 in einer Kombination aus zwei Zellen (s. Fig. 3).

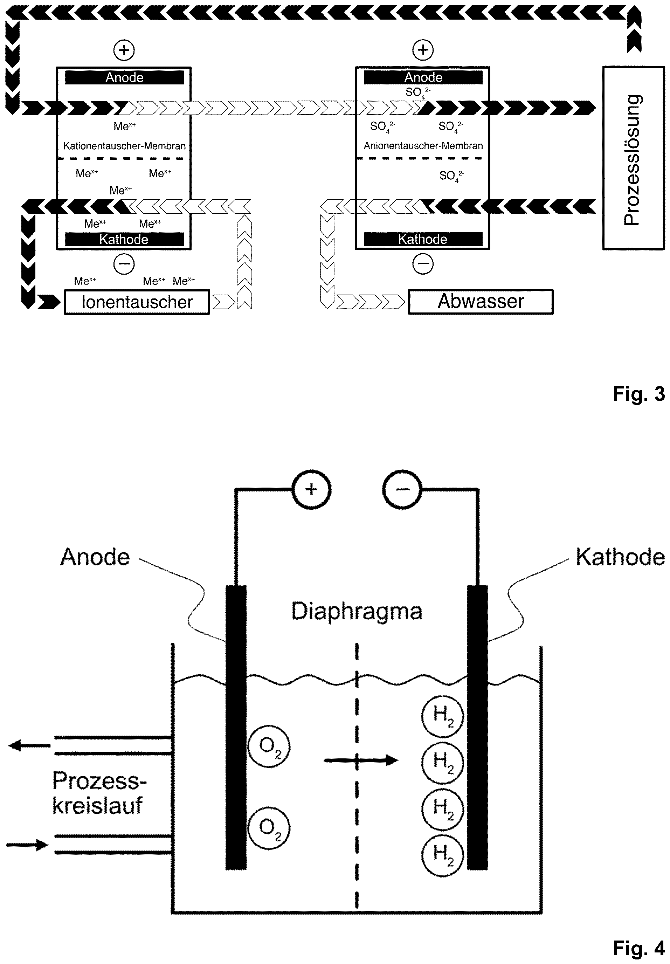

In einer weiteren bevorzugten Ausführung erfolgt die Entfernung von Wasser aus der Tauchlösung durch Elektrolyse in einer mit dem Tauchbad verbundenen Elektrolysezelle, wobei das Wasser zu Sauerstoff und Wasserstoff zersetzt wird. Die Tauchlösung wird dabei kontinuierlich aus der Tauchbadvorrichtung heraus durch die Elektrolysezelle gespült, ein Teil des Wassers elektrolytisch zersetzt und die somit wieder erfindungsgemäß konzentrierte Tauchlösung in die Tauchbadvorrichtung zurückgespült (s. Fig. 4). Die Einhaltung des Konzentrationsbereiches der Schwefelsäure in der Tauchbadlösung für das erfindungsgemäße Verfahren erfolgt beispielsweise mittels einer Dichtemessung, die zur Steuerung der Wasserentfernung genutzt wird.

In einer bevorzugten Ausführung ist die Elektrolysezelle mit einer Brennstoffzelle gekoppelt, die aus dem während der Elektrolyse gebildeten Wasserstoff und Sauerstoff elektrische Energie erzeugt.

Bevorzugt wird die in der Brennstoffzelle erzeugte elektrische Energie zum Betreiben der Elektrolysezelle genutzt, die zur Entfernung des Wassers aus der Tauchlösung durch Elektrolyse verwendet wird.

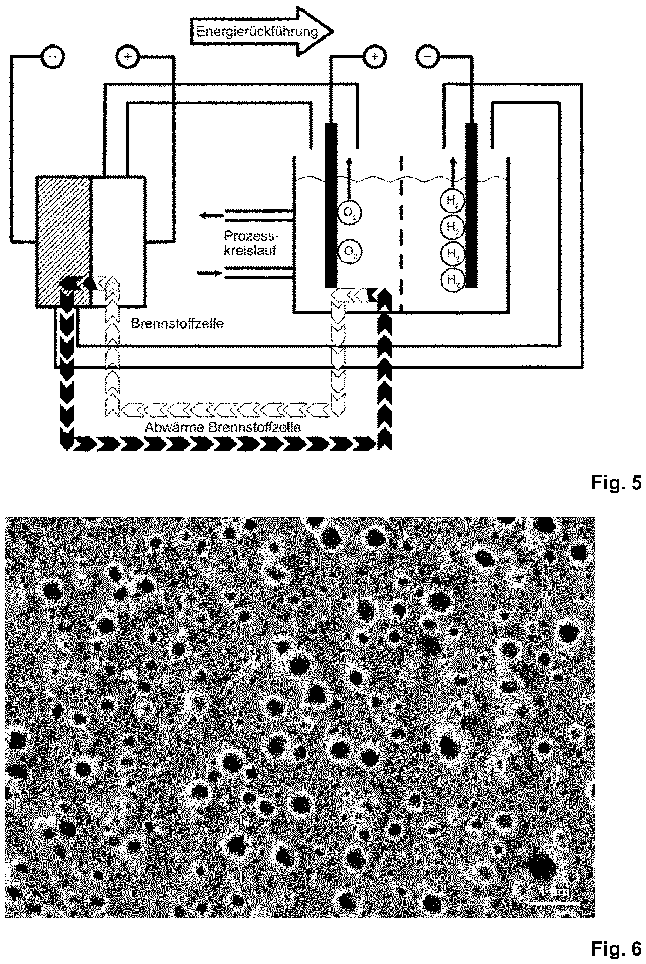

Vorteilhaft kann damit die durch die Elektrolyse des aus dem Tauchbad entfernten Wassers elektrische Energie gewonnen werden, die simultan wieder in den Prozess eingespeist wird und zum Betrieb der Elektrolsysezelle dient. Das gestaltet den Prozess ökonomisch und auch ökologisch als äußerst effizient. Besonders vorteilhaft kann dabei zusätzlich die in der Brennstoffzelle erzeugte Wärme über einen Wärmetauscher in die Prozesslösung rückgeführt werden (s. Fig. 5), um Energieverluste noch weiter zu minimieren.

Bevorzugt erfolgt das Tauchen der Teile aus Kunststoff in der Tauchlösung mit einer Temperatur von 25 bis 80 °C, besonders bevorzugt von 30 bis 75 °C, ganz besonders bevorzugt von 35 bis 50 °C.

Überraschenderweise hat sich gezeigt, dass die oxidative Wirkung der erfindungsgemäßen Mischung auch bei erhöhter Temperatur über mehrere Tage erhalten bleibt, auch oberhalb der Zersetzungstemperatur von Peroxomonoschwefelsäure (ab 45 °C).

Besonders bevorzugt erfolgt daher die Inkubation oder das Tauchen bei einer Temperatur zwischen 35 °C und 50 °C.

Prinzipiell ist das Verfahren auf einphasige und mehrphasige Kunststoffe anwendbar.

In einer bevorzugten Ausführung sind die Kunststoffe ausgewählt aus einphasigen Kunststoffen. Ein Beispiel für einen für das Verfahren geeigneten einphasigen Kunststoff ist Polyphenylensulfid (PPS). Die erfindungsgemäße Tauchlösung ermöglicht ein tiefes Eindringen in den Kunststoff und ermöglicht so eine starke Strukturierung und Hydrophilierung der Oberfläche der Kunststoffteile.

Bevorzugt sind die Kunststoffe ausgewählt aus mehrphasigen Kunststoffen.

Bevorzugt sind die Kunststoffe ausgewählt aus Acrylnitril-Butadien-Styrol (ABS)- Kunststoffen oder Acrylnitril-Butadien-Styrol-Polycarbonat (ABS/PC)- Kunststoffen oder Polyphenylensulfid (PPS-) Kunststoffen. Bei der Inkubation in die erfindungsgemäße Tauchlösung wird der Kunststoff zunächst durch die Schwefelsäure oder deren dissoziierte Form aufgeweicht. Dies ermöglicht das Eindringen in tiefere Schichten des Kunststoffs, aus denen anschließend die Butadienphase durch einen oxidativen Angriff herausgeätzt wird.

Vorteilhaft können somit auch Kunststoffe vorbehandelt werden, in welchen sich die durch die Vorbehandlung herauszuätzenden Bestandteile nicht mehr direkt an der Oberfläche der Kunststoffe befinden. Dies sind Kunststoffe, die aus der kontinuierlichen Weiterentwicklung der letzten Jahre bis Jahrzehnte resultieren und besonders verbesserte mechanische Eigenschaften aufweisen. Besonders hervorzuheben sind weiterentwickelte ABS-Kunststoffe. Während der Herstellung von Teilen aus diesen Kunststoffen tragen besondere Techniken zu einer verbesserten Bindung der Butadienphase zur Acrylnitril- und Styrolphase bei, sodass das Butadien nicht mehr direkt an der Oberfläche zu finden ist, sondern eingebettet in der Acrylnitril- /Styrolphase im Inneren des Teiles aus Kunststoff vorliegt.

Während der chemischen Vorbehandlung solcher Kunststoffe muss deshalb zunächst diese Matrix durchdrungen werden, um das Butadien durch oxidativen Angriff herauszulösen. Vorteilhaft kann dies durch die Inkubation in die Tauchlösung in dem erfindungsgemäßen Verfahren erfolgen. Verfahren aus dem Stand der Technik, die auf einer oxidativen Zersetzung der Butadienphase beruhen und die Matrix nicht angreifen sind nicht geeignet, um eine Strukturierung der Oberfläche dieser neuartigen Kunststoffe zu ermöglichen. Das resultierte bisher in wesentlich geringeren Haftfestigkeiten der abgeschiedenen Metallschichten auf diesen modernen Kunststoffen.

In modernen ABS-Kunststoffen ist das Butadien so stark in die Matrix aus Acrylnitril und Styrol eingebunden, dass es an der Oberfläche fast nicht mehr vorhanden ist. Es ist jedoch im Inneren des Kunststoffs zu finden.

Das Verhältnis des Butadienanteils an der Oberfläche des Kunststoffs und einer Schnittfläche im Inneren des Kunststoffs gibt Aufschluss darüber, ob es sich um einen modernen Kunststoff im Sinne der Erfindung handelt.

Bevorzugt sind die Kunststoffe ausgewählt aus ABS oder ABS/PC Kunststoffen, bei denen das Verhältnis der Fläche des Butadien-Anteil der Oberfläche des Kunststoffs und der Fläche des Butadien-Anteils einer Schnittfläche im Inneren des Kunststoffs von mindestens 1:5, besonders bevorzugt mindestens 1:10 beträgt. Besonders bevorzugt handelt es sich dabei um Spritzgussteile

Bevorzugt schließen sich an die Inkubation in der erfindungsgemäßen Tauchlösung zusätzlich folgende Schritte an:
- Inkubation in einer Vortauchlösung enthaltend eine Halogenwasserstoffsäure,
- Inkubation in einer Aktivatorlösung enthaltend Palladium,
- Inkubation in einer Beschleunigerlösung, und
- Außenstromlose Abscheidung einer Metallschicht.

Bevorzugt werden die Kunststoffteile vor und nach jeder Inkubation mit Wasser, bevorzugt mit stark entsalztem Wasser gespült.

Nach einer vorteilhaften Ausgestaltung kann die Tauchlösung auch zusätzlich Phosphorsäure enthalten, wobei der Massenanteil der Phosphorsäure an der Gesamtmasse der Tauchlösung 0 bis 70 %, bevorzugt 0 bis 60 %, besonders bevorzugt 0 bis 40 % beträgt.

Die nachfolgenden Beispiele sollen die Erfindung näher erläutern, ohne jedoch einschränkend zu wirken.

Dabei zeigen:
Fig. 1. Schematische Darstellung der Vorrichtung zur Entfernung der Metallionen aus dem Tauchbad über eine Kationentauschermembran.
Fig. 2. Schematische Darstellung der Vorrichtung zur Entfernung von Wasser aus dem Tauchbad über eine Anionentauschermembran.
Fig. 3. Schematische Darstellung der Kombination zur Entfernung von Metallionen und Wasser aus dem Tauchbad über eine Vorrichtung mit lonentauschermembranen.
Fig. 4. Schematische Darstellung der Entfernung von Wasser aus der Tauchlösung durch Elektrolyse
Fig. 5. Schematische Darstellung der Elektrolyse zur Entfernung von Wasser aus der Tauchlösung, gekoppelt mit einer Brennstoffzelle
Fig. 6. Die Rasterelektronenmikroskopische Aufnahme zeigt die mikrostrukturierte Oberfläche des ABS-Bauteils. Die Oberfläche ist im Gegensatz zu geätzten Oberflächen nach dem Stand der Technik relativ glatt, weist jedoch eine dichte Verteilung von Kratern durch das ausgetriebene Butadien auf.
Fig. 7. Diagramm zur Bestimmung der Konzentration undissoziierter Schwefelsäure und der einzelnen Dissoziationsprodukte der Schwefelsäure in Abhängigkeit der Gesamtkonzentration Konzentration in Wasser.

### Beispiele

### Referenzbeispiel 1 (ABS, Aktivierung mit hoher Temperatur)

Bei Raumtemperatur werden 127 ml entionisiertes Wasser mit 253,5 ml 98 %-iger Schwefelsäure gemischt und anschließend 2,34 ml 30%-ige Wasserstoffperoxidlösung zugegeben. Bezogen auf die Reinstoffe ist somit in der Lösung 253,5*0,98 = 248,43 ml Schwefelsäure enthalten, das entspricht bei einer Dichte von 1,84 g/ml einer Masse von 457,11 g. Die Masse Wasserstoffperoxid ergibt sich analog bei einer Dichte von 1,112 g/ml für eine 30%-ige Lösung zu 0,78 g. Aufgrund des enthaltenen Wassers in der Schwefelsäurelösung und der Wasserstoffperoxidlösung ergibt sich die gesamte Masse Wasser zu 127g + 253,5ml * 1,84g/ml * 0,02 + 2,34ml * 1,112g/ml * 0,7 = 138,15 g. Division durch die molaren Massen der Komponenten
M(H2SO4) = 98,08 g/mol
M(H2O) = 18,015 g/mol
M(H2O2) = 34,015 g/mol
ergibt die Stoffmengen, aus denen sich die Verhältnisse n(H2SO4):[n(H2O)+n(H2O2)] = 0,61 und n(H2SO4):n(HOO-) = 203:1 ergeben.

Diese Lösung wird anschließend auf 70 °C aufgeheizt und ein Spritzgussteil ABS Novodur P2MC für eine Dauer von 3 Minuten eingetaucht. Danach wird mit folgenden Schritten fortgefahren:
- 2 min Spülen in destilliertem Wasser
- 1 min in Vortauchlösung (200ml/l 37% HCl)
- 4 min bei 32,5°C Aktivatior Udique 879 W (Enthone)
- 2 min Spülen in destilliertem Wasser
- 5 min bei 50°C in 5 N Beschleuniger Udique 8810 (Enthone)
- 2 min Spülen in destilliertem Wasser
- 6 min bei 32°C und pH 8,9 chemisch Nickel Udique 891 (Enthone)
- 2 min Spülen in destilliertem Wasser
- Verkupferung: 45 min bei 4 A/dm² mit Glanzkupfer Cuprostar 1600 (Enthone)
- 2 min Spülen in destilliertem Wasser
- Trocknen mit Druckluft

Nach 18 h im Trockenschrank bei 70 °C wurde von der Oberfläche ein 1 cm breiter Kupferstreifen im 90°-Winkel abgezogen. Die dafür notwendige Kraft wurde mit 15 +/- 2,5 N bestimmt. Nach weiteren 7 Tagen im Trockenschrank wurde mit einer erneuten Messung 17,5 +/- 2,5 N ermittelt.

### Referenzbeispiel 2 (ABS, Aktivierung mit niedriger Temperatur)

Es wird ein Spritzgussteil ABS Novodur P2MC mit folgenden Inkubationen behandelt:
- 3 min bei 40 °C temperierte wässrige Lösung, bestehend aus 54 ml Wasser, 162,2 ml 98 % H₂SO₄ und 4,32 ml 30 % H₂O₂
- 2 min Spülen in destilliertem Wasser
- 1 min in Vortauchlösung (200 ml/l 37 % HCl)
- 4 min bei 32,5 °C Aktivatior Udique 879 W (Enthone)
- 2 min Spülen in destilliertem Wasser
- 3 min bei 50 °C in 4 N Beschleuniger Udique 8810 (Enthone)
- 2 min Spülen in destilliertem Wasser
- 10 min bei 32 °C und pH 8,9 chemisch Nickel Udique 891 (Enthone)
- 2 min Spülen in destilliertem Wasser
- 30 sek in Dekapierlösung (5 % H₂SO₄)
- Verkupferung: 40 min bei 4 A/dm² mit Glanzkupfer Cuprostar 1600 (Enthone)
- 2 min Spülen in destilliertem Wasser
- Trocknen mit Druckluft

Nach 3 Tagen im Trockenschrank bei 70 °C wurde von der Oberfläche ein 1 cm breiter Kupferstreifen im 90°-Winkel abgezogen. Die dafür notwendige Kraft betrug im Mittel 14,5 N.

### Referenzbeispiel 3 (ABS/PC T45)

- Es wird ein Spritzgussteil in Form einer Platte aus ABS/PC, Bayblend T45 PG (45 % Anteil Polycarbonat) mit den Abmessungen 3,5x7,5 mit folgenden Inkubationen behandelt:
- 5 min bei 40 °C temperierte Lösung, bestehend aus 88,7 ml Wasser, 289,1 ml 98 % H₂SO₄, 2,92 ml 30 % H₂O₂
- 2 min Spülen in destilliertem Wasser
- 1 min in Vortauchlösung (200 ml/l 37 % HCl)
- 4 min bei 32,5 °C Aktivatior Udique 879 W (Enthone)
- 2 min Spülen in destilliertem Wasser
- 3 min bei 50 °C in 0,4 N Beschleuniger Udique 8810 (Enthone)
- 2 min Spülen in destilliertem Wasser
- 10 min bei 32 °C und pH 8,9 chemisch Nickel Udique 891 (Enthone)
- 2 min Spülen in destilliertem Wasser
- 30 sek in Dekapierlösung (5 % H₂SO₄)
- Verkupferung: 40 min bei 4 A/dm² mit Glanzkupfer Cuprostar 1600 (Enthone)
- 2 min Spülen in destilliertem Wasser
- Trocknen mit Druckluft

Nach 1 h im Trockenschrank bei 70 °C wurde von der Oberfläche ein 1 cm breiter Kupferstreifen im 90°-Winkel abgezogen. Die dafür notwendige Kraft betrug im Mittel 6,0 N

### Referenzbeispiel 4 (ABS/PC T65)

Ein Spritzgussteil in Form einer Platte aus ABS/PC, Bayblend T65 der Bayer AG, mit den Abmessungen 3,5x7,5 wird mit folgenden Inkubationen behandelt:
o 3 min bei 40 °C temperierte wässrige Lösung mit 83,38 % H₂SO₄ und 0,25 % H₂O₂
o 2 min Spülen in destilliertem Wasser

Die folgenden Schritte zur Metallisierung werden wie in Beispiel 3 durchgeführt. Nach 3 Tagen im Trockenschrank bei 70 °C wurde von der Oberfläche ein 1 cm breiter Kupferstreifen im 90°-Winkel abgezogen. Die dafür notwendige Kraft betrug im Mittel 5,76 N.

### Referenzbeispiel 5 (Direktmetallisierung)

Es wird ein Spritzgussteil ABS Novodur P2MC mit einer Oberfläche von ca. 1 dm² mit folgenden Inkubationen behandelt:
- 3 min bei 40°C temperierte Lösung, bestehend aus 18,9 ml Wasser, 67,2 ml 98% H₂SO₄, 1,73 ml 30% H₂O₂
- 2 min Spülen in destilliertem Wasser
- 1 min in Vortauchlösung (200ml/l 37% HCl)
- 4 min bei 42°C UDIQUE DP Plus Activator (Enthone)
- 2 min Spülen in destilliertem Wasser
- 4 min bei 53°C in Conductor UDIQUE DP Plus Conductor (Enthone)
- 2 min Spülen in destilliertem Wasser
- Verkupferung: Stromfluss wird als Treppe geregelt mit einer Erhöhung von 0,5 A/(30 sek * cm2) bis auf 4 A/dm² , danach für 40 min konstant 4 A/dm² in Glanzkupfer-Bad Cuprostar 1600 (Enthone)
- 2 min Spülen in destilliertem Wasser
- Trocknen mit Druckluft

Nach 18 h im Trockenschrank bei 70 °C wurde von der Oberfläche ein 1 cm breiter Kupferstreifen im 90°-Winkel abgezogen. Die dafür notwendige Kraft betrug im Mittel 12,6 N.

### Referenzbeispiel 6 (Mit Zusatz Phosphorsäure)

Es wird ein Spritzgussteil ABS Novodur P2MC Alternativ mit den in der nachfolgenden Tabelle beschriebenen Inkubationen behandelt. Die Inkubationszeiten richten sich dabei nach der erforderlichen Zeit, bis eine deutliche Hydrophilierung der Oberfläche zu beobachten ist. Anschließend wird eine Aktivierung und Beschichtung nach Beispiel 1 durchgeführt und die Haftfestigkeit durch einen Abzugstest wie in Beispiel 1 überprüft. Die Inkubation wurde bei einer Temperatur von 40°C durchgeführt.

| | Variante 1 | Variante 2 | Variante 3 | Variante 4 |
|---|---|---|---|---|
| **H₂SO₄ 98% [g]** | 100 | 100 | 100 | 100 |
| **H₃PO₄ 85% [g]** | 130 | 149,9 | 204,3 | 266,5 |
| **H₂O₂ 30% [ml]** | 0,984 | 1,0238 | 1,1326 | 1,257 |
| **Inkubationszeiten bis zu hydrophiler Oberfläche [min]** | 3 | 4 | 10 | 21 |
| **Stoffmengenverhältnis H2SO4 zu (H2O2 + H2O)** | 0,80 | 0,71 | 0,53 | 0,42 |

Die Ergebnisse zeigen, dass auch bei Zugabe von größeren Mengen Phosphorsäure eine hohe Haftung zwischen Kunststoff und Metallschicht vermittelt werden kann.

### Ausführungsbeispiel 7 (elektrolytische Erzeugung des Oxidationsmittels)

In einem Becherglas wird eine zweigeteilte Elektrolysezelle aufgebaut. Eine Kationentauschermembran trennt den Kathodenraum aus PVC mit Grafitelektrode von dem Anodenraum mit Diamantelektrode mit einer Fläche von 9,1 cm². Der Kathodenraum wird mit 100 ml Schwefelsäure einer Massenkonzentration von 40 % gefüllt. Im Anodenraum wird 1 Liter Schwefelsäure mit einer Massenkonzentration von 81,5 % verwendet. Dies entspricht einer Stoffmengenkonzentration von 14,49 mol/l und einem Stoffmengenverhältnis zwischen Schwefelsäure und Wasser von 0,809.

Über die Dichte der Schwefelsäurelösung von 1,74 g/ml und der molaren Masse von 98,98 g/mol ergibt sich die Stoffmengenkonzentration der Schwefelsäure im Anodenraum zu 14,46 mol/l.

Zwischen Anode und Kathode wird eine Spannung so eingestellt, dass ein Strom von 3 Ampere fließt. In Abständen von 2,5 Stunden wird daraufhin eine Probe aus dem Anodenraum entnommen und gemäß der nachfolgenden Anleitung der Gesamtgehalt an Peroxygruppen durch den Umsatz von Fe(II)-Ionen in einer Eisensulfatlösung bestimmt.

Dazu wird in einem ersten Schritt in einem Becherglas 19 g Fe(II)Sulfat, 1,5 g Ammoniumeisen(II)Sulfat und 45 ml entionisiertes Wasser vermischt, bis alle Bestandteile gelöst sind. Anschließend erfolgt in einem zweiten Schritt eine Konzentrationsbestimmung der Fe(II)-Ionen. Dazu werden 50 ml entionisiertes Wasser in einem Becherglas vorgelegt und mit 1 ml der Eisenstammlösung aus Schritt 1 und 1 ml einer 83 %-igen Schwefelsäurelösung ergänzt. Danach werden der Lösung 50 ml entionisiertes Wasser mit einer Temperatur von 90 °C zugegeben und auf einer Rührplatte gut durchmischt. Die Bestimmung der Fe(II)-Ionen erfolgt dann durch Titration einer 0,02 molaren Kaliumpermanganatlösung, wobei 5 Mol Fe(II)-Ionen einem Mol Kaliumpermanganat entspricht.

Im dritten Schritt werden 2 ml der so bestimmten Eisenstammlösung mit 1 ml der zu bestimmenden Tauchlösung und 50 ml Wasser bei Raumtemperatur vermischt. Nach Zugabe von weiteren 50 ml entionisiertem Wasser mit einer Temperatur von 90°C und guter Durchmischung auf einer Rührplatte wird die Bestimmung der Fe(II)-Ionen nach Schritt 2 wiederholt.

Aus der Differenz der Konzentration der Fe(II)-Ionen vor und nach der Reaktion mit der Tauchlösung, bei der zwei Fe(II)-Ionen pro Peroxygruppe umgesetzt werden, konnte die Konzentration der Peroxygruppen und über die konstante Stoffmengenkonzentration der Schwefelsäure das Verhältnis Schwefelsäure zu Peroxygruppen gemäß der folgenden Tabelle bestimmt werden.

| **Zeit** | **Konzentration Peroxygruppen [mol/l]** | **Mengenverhältnis Schwefelsäure zu Peroxygruppen** |
|---|---|---|
| **2,5 Stunden** | 0,0245 | 591,4 |
| **5 Stunden** | 0,0501 | 289,2 |

Nach 5 Stunden war somit das erforderliche maximale Verhältnis Schwefelsäure zu Peroxygruppen von 312 erreicht und die Elektrolysezelle konnte abgeschaltet werden.

Die Tauchlösung konnte dann zur Vorbehandlung des Kunststoffteils analog Beispiel 1 bis 3 verwendet werden.

## Patentansprüche

1. Verfahren zur Vorbehandlung von Oberflächen von Teilen aus Kunststoff für die galvanische Beschichtung mit den Schritten:
A) Herstellen einer Kunststoffvorbehandlungstauchlösung, enthaltend undissoziierte Peroxomonoschwefelsäure und undissoziierte Schwefelsäure, aus konzentrierter Schwefelsäure, Wasser und Oxidationsmittel, wobei das Oxidationsmittel mindestens eine Peroxygruppe enthält, wobei das Oxidationsmittel in situ durch Elektrolyse generiert wird, wobei das Verhältnis der Stoffmenge an Schwefelsäure (S) zur Stoffmenge an Wasser (W) 0,42:1 bis 1,65:1 beträgt, wobei die Elektrolyse mindestens so lange betrieben wird, bis das Verhältnis der Stoffmenge an Schwefelsäure zur Stoffmenge aller Peroxygruppen in der Tauchlösung höchstens 312:1 beträgt,
B) Tauchen des zu beschichtenden Kunststoffteils in einem Tauchbad in der Kunststoffvorbe handlungstauchlösung.

2. Verfahren nach Anspruch 1, **gekennzeichnet dadurch, dass** kontaminierende Metallionen kontinuierlich aus der Tauchlösung entfernt werden.

3. Verfahren nach Anspruch 1 oder 2 **gekennzeichnet dadurch, dass** die Konzentration der Komponenten der Tauchlösung durch kontinuierliche Entfernung von Wasser aus der Tauchlösung konstant gehalten wird.

4. Verfahren nach einem der Ansprüche 1 bis 3 mit den zusätzlichen Schritten
- Tauchen in einer Vortauchlösung enthaltend eine Halogenwasserstoffsäure,
- Tauchen in einer Aktivatorlösung enthaltend Palladium,
- Tauchen in einer Beschleunigerlösung, und
- Aussenstromlose Abscheidung einer Metallschicht.

5. Verfahren nach einem der Ansprüche 1 bis 4, **gekennzeichnet dadurch, dass** die Kunststoffe ausgewählt sind aus Acrylnitril-Butadien-Styrol (ABS)- Kunststoffen oder Acrylnitril-Butadien-Styrol-Polycarbonat (ABS/PC) oder Polyphenylensulfid- (PPS) - Kunststoffen.

6. Verfahren nach einem der Ansprüche 1 bis 5 **gekennzeichnet dadurch, dass** das Tauchen in der Tauchlösung mit einer Temperatur von 25 bis 80 °C erfolgt.

7. Verfahren nach einem der Ansprüche 1 bis 6 **gekennzeichnet dadurch, dass** das Tauchen in der Tauchlösung für 1 bis 15 Minuten erfolgt.

8. Verfahren nach einem der Ansprüche 3 bis 7, **gekennzeichnet dadurch, dass** die Entfernung von Wasser aus der Tauchlösung durch Elektrolyse in einer mit dem Tauchbad verbundenen Elektrolysezelle erfolgt, wobei das Wasser zu Sauerstoff und Wasserstoff zersetzt wird.

9. Verfahren nach Anspruch 8 **gekennzeichnet dadurch, dass** die Elektrolysezelle mit einer Brennstoffzelle gekoppelt ist, die aus dem während der Elektrolyse gebildeten Wasserstoff und Sauerstoff elektrische Energie erzeugt.

10. Verfahren nach Anspruch 9 **gekennzeichnet dadurch, dass** die in der Brennstoffzelle erzeugte elektrische Energie zum Betreiben der Elektrolysezelle zur kontinuierlichen Entfernung von Wasser aus der Tauchlösung genutzt wird.

11. Verfahren nach einem der Ansprüche 3 bis 7, **gekennzeichnet dadurch, dass** die Entfernung von Wasser in der Tauchlösung durch lonenaustausch in einer Elektrolysevorrichtung mit einer Anionentauschermembran erfolgt.

12. Verfahren nach einem der Ansprüche 2 bis 11, **gekennzeichnet dadurch, dass** die Entfernung von Metallionen aus der Tauchlösung durch lonenaustausch in einer Elektrolysevorrichtung mit einer Kationentauschermembran erfolgt.

13. Verfahren nach einem der Ansprüche 1 bis 12, **gekennzeichnet dadurch, dass** die Tauchlösung zusätzlich Phosphorsäure enthält, wobei der Masseanteil an Phosphorsäure an der Gesamtmasse der Tauchlösung bis zu 70 % beträgt.

## Claims

1. Method for pretreating surfaces of parts made of plastics material for galvanic coating, comprising the steps of:
A) preparing a plastics material pretreatment immersion solution, containing undissociated peroxymonosulfuric acid and undissociated sulfuric acid, from concentrated sulfuric acid, water and oxidising agent, wherein the oxidising agent contains at least one peroxy group, wherein the oxidising agent is produced in situ by means of electrolysis, wherein the ratio of the amount of sulfuric acid (S) to the amount of water (W) is from 0.42:1 to 1.65:1, wherein the electrolysis is continued at least until the ratio of the amount of sulfuric acid to the amount of all peroxy groups in the immersion solution is at most 312:1,
B) immersing the plastics material part to be coated in the plastics material pretreatment immersion solution in an immersion bath.

2. Method according to claim 1, **characterised in that** contaminating metal ions are continuously removed from the immersion solution.

3. Method according to either claim 1 or claim 2, **characterised in that** the concentration of the components of the immersion solution is kept constant by continuously removing water from the immersion solution.

4. Method according to any of claims 1 to 3, comprising the additional steps of
- immersion in a pre-immersion solution containing a hydrohalic acid,
- immersion in an activator solution containing palladium,
- immersion in an accelerator solution, and
- electroless deposition of a metal coating.

5. Method according to any of claims 1 to 4, **characterised in that** the plastics materials are selected from acrylonitrile butadiene styrene (ABS) plastics materials or acrylonitrile butadiene styrene/polycarbonate (ABS/PC) or polyphenylene sulfide (PPS) plastics materials.

6. Method according to any of claims 1 to 5, **characterised in that** the immersion in the immersion solution is carried out at a temperature of from 25 to 80°C.

7. Method according to any of claims 1 to 6, **characterised in that** the immersion in the immersion solution is carried out for from 1 to 15 minutes.

8. Method according to any of claims 3 to 7, **characterised in that** the removal of water from the immersion solution is carried out by means of electrolysis in an electrolytic cell that is connected to the immersion bath, the water being broken down into oxygen and hydrogen.

9. Method according to claim 8, **characterised in that** the electrolytic cell is coupled to a fuel cell that generates electrical energy from the hydrogen and oxygen formed during the electrolysis.

10. Method according to claim 9, **characterised in that** the electrical energy generated in the fuel cell for operating the electrolytic cell is used for the continuous removal of water from the immersion solution.

11. Method according to any of claims 3 to 7, **characterised in that** the removal of water in the immersion solution is carried out by ion exchange in an electrolysis device having an anion exchange membrane.

12. Method according to any of claims 2 to 11, **characterised in that** the removal of metal ions from the immersion solution is carried out by ion exchange in an electrolysis device having a cation exchange membrane.

13. Method according to any of claims 1 to 12, **characterised in that** the immersion solution additionally contains phosphoric acid, the percentage by mass of phosphoric acid in the total mass of the immersion solution being up to 70%.

## Revendications

1. Procédé de prétraitement de surfaces de pièces en matière plastique pour revêtement galvanique, comprenant les étapes consistant à :
A) produire une solution d'immersion pour le prétraitement de matière plastique, la solution contenant de l'acide peroxomonosulfurique non dissocié et de l'acide sulfurique non dissocié, à partir d'acide sulfurique concentré, d'eau et d'agent d'oxydation, l'agent d'oxydation contenant au moins un groupe peroxy, l'agent d'oxydation étant généré in situ par électrolyse, le rapport de la quantité d'acide sulfurique (S) et de la quantité d'eau (W) étant de 0,42:1 à 1,65:1, l'électrolyse étant réalisée au moins aussi longtemps que le rapport de la quantité d'acide sulfurique et de la quantité totale de groupes peroxy dans la solution d'immersion ne dépasse pas 312:1,
B) immerger la pièce en matière plastique à revêtir dans un bain d'immersion dans la solution d'immersion pour le prétraitement de matière plastique.

2. Procédé selon la revendication 1, **caractérisé en ce que** des ions métalliques contaminants sont éliminés en continu de la solution d'immersion.

3. Procédé selon la revendication 1 ou 2, **caractérisé en ce que** la concentration des composants de la solution d'immersion est maintenue constante par élimination continue de l'eau de la solution d'immersion.

4. Procédé selon l'une des revendications 1 à 3 comprenant les étapes supplémentaires consistant à
- immerger dans une solution de pré-immersion contenant un acide hydrohalique,
- immerger dans une solution d'activation contenant du palladium,
- immerger dans une solution d'accélération, et à
- déposer de manière autocatalytique une couche métallique.

5. Procédé selon l'une des revendications 1 à 4, **caractérisé en ce que** les matières plastiques sont choisies parmi les matières plastiques acrylonitrile-butadiène-styrène (ABS) ou les matières plastiques acrylonitrile-butadiène-styrène polycarbonate (ABS/PC) ou polyphénylène sulfure (PPS).

6. Procédé selon l'une des revendications 1 à 5, **caractérisé en ce que** l'immersion dans la solution d'immersion est réalisée à une température de 25 à 80 °C.

7. Procédé selon l'une des revendications 1 à 6, **caractérisé en ce que** l'immersion dans la solution d'immersion est réalisée pendant 1 à 15 minutes.

8. Procédé selon l'une des revendications 3 à 7, **caractérisé en ce que** l'élimination de l'eau de la solution d'immersion est réalisée par électrolyse dans une cellule d'électrolyse reliée au bain d'immersion, l'eau étant décomposée en oxygène et en hydrogène.

9. Procédé selon la revendication 8, **caractérisé en ce que** la cellule d'électrolyse est couplée à une pile à combustible qui génère de l'énergie électrique à partir de l'hydrogène et de l'oxygène formés pendant l'électrolyse.

10. Procédé selon la revendication 9, **caractérisé en ce que** l'énergie électrique générée dans la pile à combustible pour faire fonctionner la cellule d'électrolyse est utilisée pour l'élimination continue de l'eau de la solution d'immersion.

11. Procédé selon l'une des revendications 3 à 7, **caractérisé en ce que** l'élimination de l'eau dans la solution d'immersion est réalisée par échange d'ions dans un dispositif d'électrolyse à membrane échangeuse d'anions.

12. Procédé selon l'une des revendications 2 à 11, **caractérisé en ce que** l'élimination des ions métalliques de la solution d'immersion est réalisée par échange d'ions dans un dispositif d'électrolyse à membrane échangeuse de cations.

13. Procédé selon l'une des revendications 1 à 12, **caractérisé en ce que** la solution d'immersion contient en outre de l'acide phosphorique, la fraction massique d'acide phosphorique dans la masse totale de la solution d'immersion pouvant aller jusqu'à 70 %.
